# EUROPÄISCHE PATENTSCHRIFT

(11) **EP 3 017 736 B1**
(45) Veröffentlichungstag und Bekanntmachung des Hinweises auf die Patenterteilung: **27.06.2018**
(21) Anmeldenummer: 15190130.3
(22) Anmeldetag: 16.10.2015
(51) Int. Cl.: A47J 39/00, A47J 47/14, B65D 25/04, B65D 81/38

(54) **TRANSPORTBOX FÜR GASTRO-NORM-BEHÄLTER**
TRANSPORT BOX FOR GASTRO STANDARD CONTAINER
CAISSE DE TRANSPORT POUR RÉCIPIENTS GASTRO NORM

(30) Priorität: 07.11.2014 DE 102014016463
(43) Veröffentlichungstag der Anmeldung: 11.05.2016
(73) Patentinhaber: Rieber GmbH & Co. KG, 72770 Reutlingen (DE)
(72) Erfinder: Maier, Max, 71636 Ludwigsburg (DE)
(74) Vertreter: Schumacher & Willsau

(56) Entgegenhaltungen:
- WO-A1-2007/049380
- DE-A1-102005 050 668
- DE-U- 7 528 943
- DE-U1- 29 803 436
- DE-U1-202005 015 851
- JP-A- 2004 043 020
- US-A1- 2004 238 543

## Beschreibung

Die Erfindung betrifft eine Transportbox für Gastro-Norm-Behälter, wobei die Transportbox eine thermische Isolierung ihres Innenraums gegenüber der Umgebung zur Verfügung stellt und einen Deckel aufweist, mit dem sie geöffnet und geschlossen werden kann, und wobei die Transportbox dazu vorgesehen ist, im geöffneten Zustand von oben mit Gastro-Norm-Behältern be- und entladen zu werden.

Weiterhin betrifft die Erfindung ein Verfahren zum Beladen einer von oben be- und entladbaren Transportbox für Gastro-Norm-Behälter, insbesondere einer erfindungsgemäßen Transportbox, wobei die geschlossene Transportbox eine thermische Isolierung ihres Innenraums gegenüber der Umgebung zur Verfügung stellt.

Aus der deutschen Offenlegungsschrift DE 10 2005 050 668 A1 ist eine zwar nicht speziell für den Transport von Gastro-Norm-Behältern vorgesehene Transportbox bekannt, die jedoch zumindest zum Transport von ausgewählten Gastro-Norm-Behältern geeignet sein dürfte. Diese Transportbox stellt eine thermische Isolierung ihres Innenraums gegenüber der Umgebung zur Verfügung, und sie weist einen Deckel auf, mit dem sie geöffnet und geschlossen werden kann. Dabei ist die Transportbox dazu vorgesehen, im geöffneten Zustand von oben be- und entladen zu werden. Die Transportbox weist weiterhin einen Innenraum auf, der dazu ausgelegt ist, zumindest eine Thermoisolierplatte wahlweise in zumindest einer ersten Position oder einer zweiten Position senkrecht aufzunehmen.

Die Gastro-Norm betrifft ein weltweit gebräuchliches Behältersystem, das durch die Verwendung genormter Größen einen einfachen Austausch von Lebensmittelbehältern ermöglicht und in lebensmittelverarbeitenden Betrieben sowie Großküchen Verwendung findet. Festgelegt wurde dieser Standard am 17. November 1964 vom Schweizer Verband für Spittal-, Heim- und Gemeinschaftsgastronomie und dem Schweizer Hotelier-Verein.

Ein Gastro-Norm-Behälter ist somit ein Behälter, der sich vorwiegend zum Bereithalten von warmen und kalten Speisen, aber auch zum Aufbewahren und Aufräumen von Speisen eignet. Derartige Gastro-Norm-Behälter kommen in der Gastronomie unter anderem in heißen Theken, Öfen, Kochkesseln, Kombidämpfern, in Kühlschränken und Tiefkühlgeräten zum Einsatz. Gastro-Norm-Behälter sind beispielsweise aus Chromnickelstahl, Aluminium, Glas, Porzellan oder Kunststoff. Je nach Verwendungszweck kann der Boden gegebenenfalls auch gelocht sein. Gastro-Norm-Behälter sind in der Regel ineinander stapelbar, spülmaschinenfest und so robust, dass sie auch bei täglicher intensiver Benutzung in einer Großküche den Anforderungen lange standhalten.

Dabei können die dem Gastro-Norm-Standard entsprechenden Gastro-Norm-Behälter auf verschiedene Weise in ebenfalls diesem Standard entsprechende Theken eingesetzt beziehungsweise eingehängt werden. Neben Theken sind auch Kühlhäuser oder Lagerregale, welche zu den Behältern passen, erhältlich. Auch der Austausch von Gastro-Norm-Behältern ist üblich. So kann zum Beispiel ein Lieferant ein mit Lebensmitteln gefülltes Gefäß abliefern und im Gegenzug ein leeres Gefäß gleicher Größe wieder mitnehmen.

Das Gastro-Norm-Grundmaß 1/1 beträgt 325 x 530 mm, was einer Annäherung an den sogenannten goldenen Schnitt entspricht. Kleinere Maße werden in Brüchen relativ zur Fläche des Grundmaßes angegeben, wobei folgende Größen üblich sind:

| **Bezeichnung** | **GL:GB** | **Länge (mm)** | **Breite (mm)** | **Fläche (m²)** | **Seitenverhältnis** |
|---|---|---|---|---|---|
| 2/1 | 1:2 | 530 | 650 | 0,345 | 1,23 |
| 1/1 | 1:1 | 530 | 325 | 0,172 | 1,63 |
| 2/3 | ²/₃:1 | 354 | 325 | 0,115 | 1,09 |
| 1/2 | ¹/₂:1 | 265 | 325 | 0,086 | 1,23 |
| 1/3 | ¹/₃:1 | 176 | 325 | 0,057 | 1,85 |
| 1/4 | ¹/₂:¹/₂ | 265 | 162 | 0,043 | 1,63 |
| 1/6 | ¹/₃:¹/₂ | 176 | 162 | 0,029 | 1,09 |
| 1/9 | ¹/₃:¹/₃ | 176 | 108 | 0,019 | 1,63 |
| 2/4 | 1:¹/₂ | 530 | 162 | 0,086 | 3,27 |
| 2/8 | ¹/₄:1 | 132 | 325 | 0,043 | 2,46 |

Um in Gastro-Norm-Behältern enthaltene warme oder kalte Speisen an ihren Bestimmungsort zu bringen, werden Transportboxen der eingangs genannten Art verwendet. Ein typisches Beispiel für eine derartige Transportbox ist der von der Firma Rieber® erhältliche thermoport® 100. Beispielsweise die Abmessungen des Innenraums dieser Transportbox sind so gewählt, dass ein 1/1-Gastro-Norm-Behälter mit einem zum Einsetzen und Herausnehmen des Behälters erforderlichen geringen Spiel (wenige Millimeter) auf der zur Verfügung stehenden Stellfläche abgestellt werden kann. Aufgrund der Gastro-Norm ist es selbstverständlich ebenfalls möglich, mehrere, gegebenenfalls auch unterschiedlich gro-ße, Gastro-Norm-Behälter in dieser Transportbox praktisch verrutschsicher abzustellen, solange die Behältergrößen so gewählt werden, dass sich insgesamt die für einen 1/1-Gastro-Norm-Behälter erforderliche Stellfläche ergibt.

In vielen Fällen ist es erforderlich, ganze Menüs zum Bestimmungsort zu bringen. Ein solches Menü kann beispielsweise aus warmzuhaltenden Vor- und Hauptspeisen sowie aus kühlzuhaltenden Nachspeisen bestehen. Um den unterschiedlichen Temperaturanforderungen gerecht zu werden, ist es bisher üblich, für warmzuhaltende Speisen und für kaltzuhaltende Speisen unterschiedliche Transportboxen vorzusehen. Dies ist solange unproblematisch, wie die Anzahl der zu verköstigenden Personen so groß ist, dass ohnehin eine Vielzahl von Transportboxen zum Bestimmungsort transportiert werden muss. Als ineffizient erweist sich diese Vorgehensweise jedoch in Fällen, in denen nur eine vergleichsweise kleine Anzahl von Personen, beispielsweise zehn oder weniger Personen, mit warmen und kalten Speisen zu verköstigen ist. Denn in diesem Fall können die Innenräume der verwendeten Transportboxen häufig nicht vollständig genutzt werden, was im Ergebnis größere Transportkapazitäten erfordert. Darüber hinaus sind das Handling und die Aufbewahrung der verwendeten Transportboxen aufwändig.

Der Erfindung liegt die Aufgabe zugrunde, die gattungsgemäßen Transportboxen für Gastro-Norm-Behälter und das gattungsgemäße Verfahren zum Beladen einer solchen Transportbox derart weiterzubilden, dass sich auch ein vergleichsweise kleiner Personenkreis (beispielsweise zehn oder weniger Personen) effizient mit warmen und kalten Speisen versorgen lässt, wobei jedoch die bisher bekannten, bewährten Eigenschaften und Einsatzmöglichkeiten der Transportboxen beibehalten werden sollen.

Bezogen auf die Transportbox löst die Erfindung diese Aufgabe mit den Merkmalen des Anspruchs 1 und bezogen auf das Beladeverfahren mit den Merkmalen des Anspruchs 13. Vorteilhafte Ausgestaltungen und Weiterbildungen der Erfindungen ergeben sich aus den abhängigen Ansprüchen.

Die erfindungsgemäße Transportbox für Gastro-Norm-Behälter baut auf dem gattungsgemäßen Stand der Technik dadurch auf, dass die Transportbox einen Innenraum aufweist, der dazu ausgelegt ist, zumindest eine Thermoisolierplatte wahlweise in zumindest einer ersten Positionen oder einer zweiten Position senkrecht aufzunehmen, dass von den Abmessungen des Innenraums Länge, Breite und Höhe, die Länge und die Breite so gewählt sind, dass der Innenraum in zumindest zwei thermisch voneinander isolierte Teilinnenräume mit zwei an die Abmessungen von Gastro-Norm-Behältern angepassten Stellflächen unterteilt ist, wenn sich die Thermoisolierplatte in der ersten Position befindet, und dass sich nur eine an die Abmessungen von Gastro-Norm-Behältern angepasste Stellfläche ergibt, wenn sich die Thermoisolierplatte in der zweiten Position befindet.

Das erfindungsgemäße Verfahren zum Beladen einer Transportbox baut auf dem gattungsgemäßen Stand der Technik dadurch auf, dass es die folgenden Schritte umfasst:
a) Öffnen der Transportbox, falls diese nicht bereits geöffnet ist;
b) Bewegen einer in der Transportbox enthaltenen Thermoisolierplatte von einer zweiten Position, in der sich nur eine an die Abmessungen von Gastro-Norm-Behältern angepasste Stellfläche ergibt, in eine erste Position, wobei die Thermoisolierplatte sowohl in der ersten Position als auch in der zweiten Position senkrecht in dem Innenraum der Transportbox angeordnet ist, und wobei die erste Position so gewählt wird, dass die Thermoisolierplatte zwei thermisch voneinander isolierte Teilinnenräume begrenzt, deren Stellflächen an die Abmessungen von Gastro-Norm-Behältern angepasst sind;
c) Beladen von wenigstens einem Teilinnenraum mit einem oder mehreren Gastro-Norm-Behältern; und
d) Verschließen der Transportbox.

Sowohl mit der erfindungsgemäßen Transportbox für Gastro-Norm-Behälter als auch mit dem erfindungsgemäßen Verfahren zum Beladen einer Transportbox für Gastro-Norm-Behälter ist es möglich, warmzuhaltende und kaltzuhaltende Speisen innerhalb ein und derselben Transportbox zu lagern und/oder zu transportieren, nämlich in den thermisch voneinander isolierten Teilinnenräumen. Die Abmessungen des Innenraums der Transportbox und die Stärke der Thermoisolierplatte sind dabei so aufeinander abgestimmt, dass die verwendeten Gastro-Norm-Behälter mit dem aus dem Stand der Technik bekannten Spiel auf den beiden Stellflächen abgestellt werden können. Sofern der Innenraum der Transportbox durch die Verwendung von mehreren Thermoisolierplatten in mehr als zwei Teilinnenräume aufteilbar sein soll, sind selbstverständlich die wirksamen Gesamtstärken der Thermoisolierplatten zu berücksichtigen. Unabhängig davon, ob die Verwendung von einer Thermoisolierplatte oder die Verwendung von mehreren Thermoisolierplatten innerhalb einer Transportbox vorgesehen ist, kann die Transportbox in vorteilhafterweise so ausgelegt sein, dass sich Teilinnenräume mit unterschiedlichen Größen erzeugen lassen. Auch wenn sich auf diese Weise mehr als nur zwei Stellflächen ergeben, sind diese vorteilhaft an die Abmessungen von Gastro-Norm-Behältern angepasst. Erfindungsgemäß ist vorgesehen, dass sich nur eine an die Abmessungen von Gastro-Norm-Behältern angepasste Stellfläche ergibt, wenn sich die Thermoisolierplatte in der zweiten Position befindet. Dies lässt sich erreichen, wenn die zweite Position ganz am Rand des Innenraums vorgesehen ist, so dass die Thermoisolierplatte dort geparkt werden kann, wenn eine Unterteilung des

Innenraums in zwei oder mehr Teilinnenräume nicht erforderlich ist. Wenn beispielsweise nur eine Thermoisolierplatte vorgesehen und diese in der zweiten Position geparkt ist, kann sich beispielsweise eine Transportbox ergeben, deren Funktionalität vollständig der der oben erwähnten Transportbox thermoport® 100 von der Firma Rieber® entspricht. Das heißt, es steht dann eine Transportbox zur Verfügung, die eine an die Abmessungen eines 1/1-Gastro-Norm-Behälters angepasste Stellfläche aufweist. Allenfalls ist es erforderlich, die Außenabmessungen der Transportbox zu diesem Zweck geringfügig zu vergrößern, nämlich um maximal die Stärke der Thermoisolierplatte. Vorzugsweise bleiben die Außenabmessungen der Transportbox im Vergleich zum Stand der Technik jedoch unverändert, was beispielsweise durch den Einsatz von besonders wirksamem Isoliermaterial möglich ist. Denn auf diese Weise lassen sich die erfindungsgemäßen Transportboxen beispielsweise in der gewohnten Art und Weise mit den bekannten Transportboxen stapeln.

Im vorstehend erläuterten Zusammenhang wird weiterhin bevorzugt, dass die nur eine angepasste Stellfläche an die Abmessungen eines 1/1-Gastro-Norm-Behälters angepasst ist. An Transportboxen, die an die Abmessungen von 1/1-Gastro-Norm-Behältern angepasst sind, haben sich die angesprochenen Verkehrskreise gewöhnt, weil sich diese Grö-ße von Transportboxen hinsichtlich des Handlings und der Transportanforderungen bewährt hat.

Als besonders vorteilhaft hat es sich erwiesen, wenn die erfindungsgemäße Transportbox dadurch weitergebildet ist, dass von den zwei angepassten Stellflächen eine an die Abmessungen eines 1/3-Gastro-Norm-Behälters und eine an die Abmessungen eines 2/3-Gastro-Norm-Behälters angepasst ist. Die sich dabei ergebenden Größenverhältnisse der Teilinnenräume (ca. 1/3 zu 2/3) sind häufig ideal, um beispielsweise warmzuhaltende Vor- und Hauptspeisen in dem größeren Teilinnenraum unterzubringen, während beispielsweise die kühlzuhaltende Nachspeise dann in dem kleineren Teilinnenraum untergebracht werden kann. Selbstverständlich ist diese Aufteilung des Innenraums der Transportbox nur beispielhaft und es können im Rahmen der Erfindung beliebige Aufteilungen vorgenommen werden, solange die sich ergebenden Stellflächen an die Abmessungen von Gastro-Norm-Behältern angepasst sind. Beispielsweise ist es ebenfalls denkbar, den Innenraum der Transportbox in zwei gleich große Teilinnenräume zu halbieren, so dass dann zwei an die Abmessungen von 1/2-Gastro-Norm-Behältern angepasste Stellflächen zur Verfügung stehen. Die erfindungsgemäße Anpassung der Stellflächen an die Abmessungen von Gastro-Norm-Behältern schließt natürlich in diesem wie auch in allen anderen Fällen nicht aus, dass die Transportboxen zusätzliche beliebig große Abteile oder Fächer für Zubehör aufweisen, das üblicherweise nicht in Gastro-Norm-Behältern transportiert wird.

Für die erfindungsgemäße Transportbox wird es weiterhin bevorzugt, dass diese Seitenwände-Innenseiten mit ersten senkrechten Seitennuten und mit zweiten senkrechten Seitennuten aufweist, dass die ersten Seitennuten die erste Position und die zweiten Seitennuten die zweite Position festlegen, und dass die zumindest eine Thermoisolierplatte wahlweise in die ersten Seitennuten oder die zweiten Seitennuten einsteckbar ist. Die Abmessungen der Seitennuten sind dabei vorzugsweise so an die Stärke angepasst, die die Thermoisolierplatte zumindest in ihrem Außenumfangsbereich aufweist, dass sich nach dem Einstecken der Thermoisolierplatte ein Formschluss ergibt. Auf diese Weise wird eine besonders gute thermische Isolierung der Teilinnenräume erzielt, sofern die Thermoisolierplatte so eingesteckt wird, dass sich mindestens zwei Stellflächen ergeben, wenn sich die Thermoisolierplatte also nicht in ihrer Parkposition befindet. Als besonders vorteilhaft hat es sich dabei erwiesen, wenn die Seitennuten und die Seitenkanten der Thermoisolierplatte in aufeinander abgestimmter Weise abgerundet sind, weil sich dadurch große Kontaktflächen ergeben, was die angestrebte thermische Isolierung weiter verbessert.

Im vorstehend erläuterten Zusammenhang wird weiterhin bevorzugt, dass die Transportbox eine Boden-Innenseite mit einer ersten Bodennut und mit einer zweiten Bodennut aufweist, dass die erste Bodennut in einer Ebene mit den ersten Seitennuten liegt, und dass die zweite Bodennut in einer Ebene mit den zweiten Seitennuten liegt. So werden vorzugsweise um 270° umlaufende durchgehende Nuten geschaffen, was sich ebenfalls positiv auf die Isoliereigenschaften auswirkt, ganz besonders, wenn hinsichtlich der Wahl der Abmessungen und der Formgebung die im Zusammenhang mit den Seitennuten erläuterten Auslegungsvorschläge berücksichtigt werden.

Gleiches gilt sinngemäß, wenn zusätzlich oder alternativ vorgesehen ist, dass die Transportbox eine Deckel-Innenseite mit einer ersten Deckelnut und mit einer zweiten Deckelnut aufweist, dass die erste Deckelnut in einer Ebene mit den ersten Seitennuten liegt, und dass die zweite Deckelnut in einer Ebene mit den zweiten Seitennuten liegt, wobei sich die besten Isoliereigenschaften dann ergeben, wenn die eingesetzte Thermoisolierplatte mit ihrem gesamten Umfangsbereich durchgehend in den dann um 360° umlaufenden Nuten formschlüssig aufgenommen wird.

Gemäß einer ebenfalls bevorzugten Weiterbildung der erfindungsgemäßen Transportbox ist vorgesehen, dass sie Seitenwände-Innenseiten mit mehreren senkrechten Ausnehmungen aufweist, die ein Hineinstellen und ein Herausnehmen von Gastro-Norm-Behältern erleichtern. Die Abmessungen dieser Ausnehmungen werden dabei vorzugsweise so gewählt, dass mit den Fingern relativ problemlos unter den Kragen eines eingesetzten Gastro-Norm-Behälters gegriffen werden kann, um diesen aus der Transportbox zu entnehmen. Dabei kann es vorteilhaft sein, wenn die Ausnehmungen so angeordnet sind, dass die eingesetzten Gastro-Norm-Behälter relativ mittig gegriffen werden können. Ähnlich vorteilhaft ist es, wenn die Ausnehmungen so angeordnet sind, dass benachbart zu zwei maximal beabstandeten Ecken eines Gastro-Norm-Behälters unter dessen Kragen gegriffen werden kann.

Bei bevorzugten Ausführungsformen der erfindungsgemäßen Transportbox ist vorgesehen, dass die Transportbox mit einer von außen erfassbaren ID versehen ist, die mit der aktuellen Anzahl der Teilinnenräume mit an die Abmessungen von Gastro-Norm-Behältern angepassten Stellflächen verknüpfbar oder verknüpft ist. Derzeit wird bevorzugt, dass es sich bei der von außen erfassbaren ID um einen QR-Code handelt, weil QR-Codes derzeit beispielsweise im Zusammenhang mit dem von der Firma Rieber® angebotenen °CHECK®-System verwendet werden, um insbesondere HACCP-relevante Daten zu erfassen, zuzuordnen und zu verwalten. HACCP steht für Hazard Analysis and Critical Control Points beziehungsweise Gefahrenanalyse und kritische Kontrollpunkte. Bei diesem Konzept handelt es sich um ein klar strukturiertes und auf präventive Maßnahmen ausgerichtetes Werkzeug, das der Vermeidung von Gefahren im Zusammenhang mit Lebensmitteln dient, die zu einer Erkrankung von Konsumenten führen könnten. Selbstverständlich ist es bereits jetzt oder auch für die Zukunft denkbar, die IDs auf andere Art und Weise bereitzustellen, beispielsweise mithilfe von RFID-Chips, Barcodes oder dergleichen. Das erwähnte Organisationswerkzeug °CHECK® ermöglich bereits heute die digitale, zentrale Erfassung und Verwaltung von relevanten Daten im Arbeitsprozess, wobei jedes Objekt mittels QR-Code eindeutig identifiziert wird und zugeordnete Daten hinterlegt werden können. Die Digitalisierung des Foodflows kann dabei grundsätzlich über zwei verschiedene Arten der Datenerfassung durchgeführt werden. So ist es möglich, eine mobile und digitale Echtzeiterfassung vorzugsweise aller HACCP-relevanten Daten mittels Bluetooth-Kerntemperaturfühler, Smartphone und QR-Code durchzuführen. Der QR-Code wird dabei für die genaue Zuordnung des zu überwachenden beziehungsweise zu messenden Objekts verwendet, was eine eindeutige Identifizierung gewährleistet. Diese Art der Datenerfassung wird im Zusammenhang mit der vorliegenden Erfindung im Moment bevorzugt. Es ist aber ebenfalls möglich, fest installierte Sensoren in der erfindungsgemäßen Transportbox vorzusehen, so dass insbesondere die HACCP-relevanten Daten automatisiert erfasst und dokumentiert werden können. Die Sensoren können dann beispielsweise über Funk und/oder Internet die relevanten Daten in vorgegebenen Zeitintervallen oder kontinuierlich an eine Datenbank übertragen, insbesondere an eine zentrale Datenbank.

Im Hinblick auf den zuletzt genannten Fall, kann daher vorgesehen sein, dass die Transportbox mit wenigstens zwei Temperatursensoren ausgestattet ist, die so angeordnet sind, dass jeder von ihnen die Temperatur in einem der Teilinnenräume erfassen kann. Beispielsweise ist es denkbar, die zumindest zwei Temperatursensoren in den Deckel der Transportbox zu integrieren, bezogen auf die Länge des Deckels beispielsweise im Bereich von dessen Endabschnitten.

Ohne darauf beschränkt zu sein, kann die ID insbesondere dazu dienen, direkt oder indirekt mittels einer Datenbank eine oder mehrere der folgenden Informationen bezogen auf den jeweiligen Teilinnenraum der Transportbox bereitzustellen oder zuzuordnen: In der Transportbox enthaltene mittels eigener ID eindeutig identifizierbare Gastro-Norm-Behälter; Art der in der Transportbox enthaltenen Speisen; Menge der in der Transportbox enthaltenen Speisen; Solltemperatur der in der Transportbox enthaltenen Speisen; Isttemperatur der in der Transportbox enthaltenen Speisen; Herkunft der in der Transportbox enthaltenen Speisen; Ziel der in der Transportbox enthaltenen Speisen; Verweis auf einen Datensatz einer Datenbank; HACCP-relevante Daten, oder Verweis auf einen Datensatz einer HACCP-relevante Daten aufnehmenden und/oder bereitstellenden Datenbank. Wenn die einzelnen in der Transportbox enthaltenen Gastro-Norm-Behälter ihrerseits mit einer eigenen eindeutigen ID versehen sind, reicht es insbesondere beim Zugriff auf eine zentrale Datenbank aus, wenn über die ID der Transportbox lediglich auf die IDs der Gastro-Norm-Behälter und somit auf die ihnen zugeordneten Datensätze verwiesen wird. Zusätzlich oder alternativ ist es aber ebenfalls denkbar, dass über die ID der Transportbox Informationen über die Art, die Menge, die Solltemperatur, die Isttemperatur, die Herkunft und/oder das Ziel der in der Transportbox enthaltenen Speisen gewonnen oder aktualisiert werden können. Grundsätzlich kommen in diesem Zusammenhang alle HACCP-relevanten aber auch darüber hinausgehende, für den jeweiligen Foodflow relevante Daten in Betracht. Dies gilt vor allem dann, wenn eine Datenbank, insbesondere eine zentrale Datenbank verwendet wird, wie sie beispielsweise das oben erwähnte °CHECK®-System zur Verfügung stellt.

In den Schutzbereich der vorliegenden Erfindung fällt auch die Verwendung einer Thermoisolierplatte in einer erfindungsgemäßen Transportbox. Die Abmessungen der Thermoisolierplatte sind dabei vorzugsweise so gewählt, dass der Umfangsbereich der Thermoisolierplatte formschlüssig von den Nuten der Transportbox aufgenommen werden kann.

Als besonders vorteilhaft hat es sich herausgestellt, wenn die Thermoisolierplatten zumindest teilweise aus Polypropylen bestehen. Polypropylen weist nämlich im Hinblick auf das Preis-Leistungs-Verhältnis besonders gute Isoliereigenschaften auf. Die Oberfläche der Thermoisolierplatten kann gegebenenfalls ganz oder teilweise aus einem anderen Material bestehen, beispielsweise aus einem Material, das für einen direkten Kontakt mit Speisen geeignet ist. Weiterhin können die Thermoisolierplatten jeweils einen oder mehrere Griffe aufweisen, die ein Einsetzen und Herausnehmen der Thermoisolierplatten erleichtern. Als besonders bevorzugt werden in diesem Zusammenhang Griffmulden angesehen, also insbesondere keine Griffe in Form von sich durch die Thermoisolierplatten hindurcherstreckenden Öffnungen, weil solche Öffnungen die Isoliereigenschaften naturgemäß stark verschlechtern würden.

Im Hinblick auf das erfindungsgemäße Verfahren zum Beladen einer von oben be- und entladbaren Transportbox für Gastro-Norm-Behälter wird bevorzugt, dass es den folgenden weiteren, bezogen auf die Schritte a) bis d) an beliebiger Stelle ausführbaren Schritt e) umfasst: Verknüpfen der aktuell vorgesehenen Anzahl von Teilinnenräumen mit einer von außen erfassbaren ID der Transportbox. Bei der von außen erfassbaren ID kann es sich auch in diesem Fall insbesondere um einen QR-Code handeln, natürlich ohne darauf beschränkt zu sein. Auf die entsprechenden Ausführungen im Zusammenhang mit der erfindungsgemäßen Transportbox, die vorzugsweise auch für das erfindungsgemäße Verfahren berücksichtigt werden, wird zur Vermeidung von Wiederholungen verwiesen. Die Verknüpfung der Anzahl der aktuell vorgesehenen Teilinnenräume kann im Falle eines QR-Codes beispielsweise wie folgt durchgeführt werden: Der QR-Code der Transportbox wird beispielsweise mit einem Smartphone erfasst, auf dem eine Anwendung installiert ist, über die die aktuell vorgesehene Anzahl von Teilinnenräumen, beispielsweise "zwei", eingegeben werden kann. Das Smartphone hat Zugriff auf eine (vorzugsweise zentrale) Datenbank, in der für den entsprechenden QR-Code ein Datensatz existiert oder angelegt wird, der die durch den QR-Code angegebene ID mit dieser Anzahl "zwei" verknüpft, wobei vorzugsweise natürlich noch weitaus mehr Informationen in dem Datensatz abgelegt werden und/oder abgelegt sind. Auf diese Weise wird es beispielsweise einem Empfänger der Transportbox, der ebenfalls Zugriff auf die Datenbank hat, ermöglicht, durch Scannen des QR-Codes und eine entsprechende Abfrage bei der Datenbank, die aktuelle Anzahl der Teilinnenräume der Transportbox (und vorzugsweise noch weitaus mehr Informationen - siehe unten) abzurufen.

In vorteilhafter Weise kann der Schritt e) zum Beispiel weiterhin umfassen, dass die von außen erfassbare ID mit Informationen darüber verknüpft wird, ob es sich bei einem jeweiligen Teilinnenraum um einen Warmhalte-Teilinnenraum oder einen Kalthalte-Teilinnenraum handelt. Zu diesem Zweck kann beispielsweise die auf dem Smartphone laufende Anwendung eine graphische Benutzeroberfläche haben, über die der Benutzer dem jeweiligen Innenraum die entsprechende Funktion zuordnet.

Zusätzlich oder alternativ kann der Schritt e) weiterhin umfassen, dass eine oder mehrere der folgenden Informationen mit der von außen erfassbaren ID der Transportbox bezogen auf den jeweiligen Teilinnenraum der Transportbox verknüpft wird: in der Transportbox enthaltene oder einzubringende mittels eigener ID eindeutig identifizierbare Gastro-Norm-Behälter; Art der in der Transportbox enthaltenen Speisen; Menge der in der Transportbox enthaltenen Speisen; Solltemperatur der in der Transportbox enthaltenen Speisen; Isttemperatur der in der Transportbox enthaltenen Speisen; Herkunft der in der Transportbox enthaltenen Speisen; Ziel der in der Transportbox enthaltenen Speisen; Verweis auf einen Datensatz einer Datenbank; HACCP-relevante Daten, oder Verweis auf einen Datensatz einer HACCP-relevante Daten aufnehmenden und/oder bereitstellenden Datenbank. Auch diese Aufzählung ist natürlich nicht abschließend, denn, auch in Abhängigkeit vom jeweiligen Anwendungsfall, existiert eine große Vielfalt von möglicherweise interessierenden Informationen. Auch wenn die Verwendung von Smartphones zum Aktualisieren und Abfragen einer vorzugsweise zentralen Datenbank derzeit als besonders vorteilhaft erachtet wird, kann zu diesem Zweck selbstverständlich auch andere geeignete Hardware verwendet werden, oder das Smartphone kann mit zusätzlicher Hardware zusammenarbeiten, beispielsweise mit über Bluetooth gekoppelten Temperaturfühlern, Waagen usw.

Bevorzugte Ausführungsformen der Erfindung werden nachfolgend anhand der zugehörigen Zeichnungen beispielhaft erläutert.

Es zeigen:
- Figur 1: eine Ausführungsform der erfindungsgemäßen Transportbox in einer dreidimensionalen Darstellung, wobei der Innenraum der Transportbox durch eine herausnehmbare Thermoisolierplatte in zwei Teilinnenräume unterteilt ist, und wobei der Deckel der Transportbox abgenommen und nicht dargestellt ist;
- Figur 2: eine Draufsicht auf die in Figur 1 dargestellte Transportbox, ebenfalls bei abgenommenem und nicht dargestelltem Deckel;
- Figur 3: die Draufsicht auf die Transportbox gemäß Figur 2, jedoch mit aufgesetztem und geschlossenem Deckel;
- Figur 4: eine Längsschnittansicht durch die Transportbox von Figur 1;
- Figur 5: die Transportbox gemäß Figur 1 mit in der zweiten Position geparkter Thermoisolierplatte und nur einer somit zur Verfügung gestellten Stellfläche, wobei der Deckel der Transportbox abgenommen und nicht dargestellt ist;
- Figur 6: eine Draufsicht auf die in Figur 5 dargestellte Transportbox, ebenfalls bei abgenommenem und nicht dargestelltem Deckel;
- Figur 7: die Draufsicht auf die Transportbox gemäß Figur 5, jedoch mit aufgesetztem und geschlossenem Deckel;
- Figur 8: eine Längsschnittansicht durch die Transportbox von Figur 5;
- Figur 9: eine Längsschnittansicht der Transportbox von Figur 1, wobei sich eine Thermoisolierplatte in einer dritten Position derart befindet, dass der Innenraum in zwei gleich große Teilinnenräume aufgeteilt ist;
- Figur 10: eine Querschnittansicht der Transportbox von Figur 5 mit vier eingesetzten und aufeinander gestapelten 1/1-Gastro-Norm-Behältern;
- Figur 11: eine Draufsicht auf eine Transportbox bei abgenommenem Deckel, wobei die Transportbox durch eine Thermoisolierplatte in zwei gleich große Teilinnenräume unterteilt ist, die mit zwei 1/4-Gastro-Norm-Behältern und zwei 2/8-Gastro-Norm-Behältern bestückt sind;
- Figur 12: eine Draufsicht auf eine Transportbox bei abgenommenem Deckel, wobei sich die Thermoisolierplatte in der zweiten Position befindet und somit nur eine Stellfläche zur Verfügung stellt, die mit zwei 2/4-Gastro-Norm-Behältern bestückt ist; und
- Figur 13: eine Draufsicht auf eine Transportbox bei abgenommenem Deckel, wobei die Transportbox durch eine Thermoisolierplatte in zwei Teilinnenräume unterteilt ist, wobei der eine Teilinnenraum eine Größe von 2/3 des Gesamtinnenraums besitzt, welcher mit vier 1/6-Gastro-Norm-Behältern bestückt ist, und wobei der zweite Teilinnenraum eine Größe von 1/3 des Gesamtinnenraums besitzt, welcher mit drei 1/9-Gastro-Norm-Behältern bestückt ist.

Bei der nachfolgenden Beschreibung der Zeichnungen bezeichnen gleiche Bezugszeichen gleiche oder vergleichbare Komponenten.

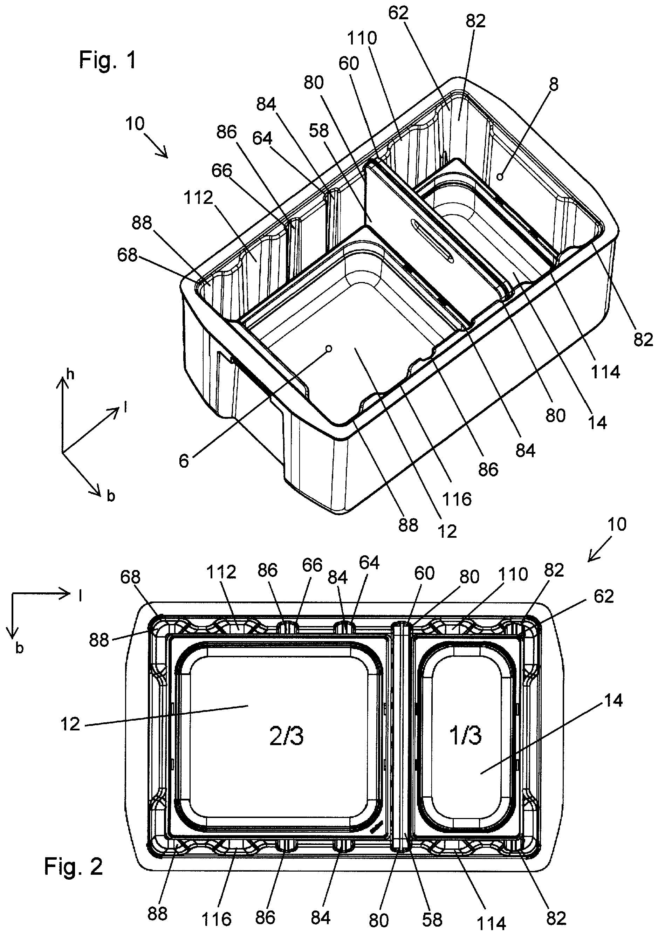

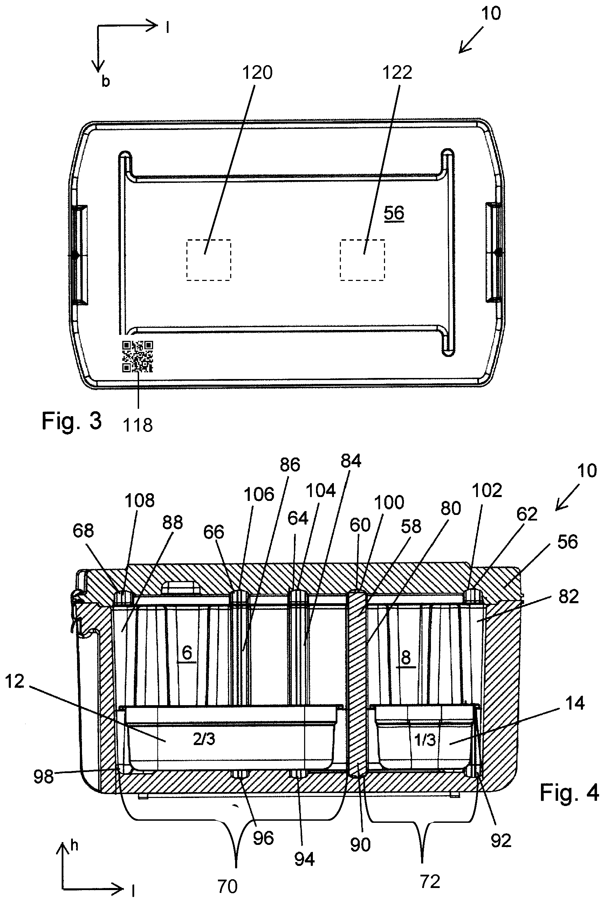

Die Figuren 1 bis 4, die nun gemeinsam beschrieben werden, zeigen eine Ausführungsform der erfindungsgemäßen Transportbox 10. Die Transportbox 10 stellt eine thermische Isolierung ihres Innenraums gegenüber der Umgebung zur Verfügung. Der Deckel 56 der Transportbox 10 ist in den Figuren 1 und 2 abgenommen und daher nicht dargestellt. Alternativ zu einem abnehmbaren Deckel kommen beispielsweise auch aufklappbare oder aufschiebbare Deckel in Betracht. Die Transportbox 10 ist dazu vorgesehen, in geöffnetem Zustand von oben mit Gastro-Norm-Behältern be- und entladen zu werden. Bei der Konfiguration gemäß den Figuren 1 bis 4 ist der Innenraum der Transportbox 10 dazu ausgelegt, eine Thermoisolierplatte 58 wahlweise in einer ersten Position 60, einer zweiten Position 62, einer dritten Position 64, einer vierten Position 66 oder einer fünften Position 68 senkrecht aufzunehmen, wobei sich die Thermoisolierplatte bei der in den Figuren 1 bis 4 dargestellten Konfiguration der Transportbox 10 an der ersten Position 60 befindet. Von den Abmessungen des Innenraums Länge I, Breite b und Höhe h, sind die Länge I und die Breite b so gewählt, dass der Innenraum in zwei thermisch voneinander isolierte Teilinnenräume 6, 8 mit zwei an die Abmessungen von Gastro-Norm-Behältern angepassten Stellflächen 70, 72 (siehe Figur 4) unterteilt ist, und zwar durch die Thermoisolierplatte 58, die sich in der ersten Position 60 befindet. Die erste Stellfläche 70 ist dabei an die Abmessungen eines 2/3-Gastro-Norm-Behälters 12 angepasst, während die Stellfläche 72 an die Abmessungen eines 1/3-Gastro-Norm-Behälters 14 angepasst ist. Unter angepassten Stellflächen beziehungsweise Teilinnenräumen ist dabei zu verstehen, dass gerade so viel Spiel vorhanden ist, dass die Gastro-Norm-Behälter in die Transportbox eingesetzt und aus dieser herausgenommen werden können, wobei ein Verrutschen der Gastro-Norm-Behälter innerhalb der Transportbox 10 aufgrund des geringen Spiels jedoch praktisch ausgeschlossen ist. Zu diesem Zweck kann das Spiel beispielsweise 2 bis 5 mm betragen. Insbesondere den Darstellungen der Figuren 1 und 4 kann entnommen werden, dass auf die Gastro-Norm-Behälter 12, 14 mindestens noch zwei weitere Gastro-Norm-Behälter aufgestapelt werden könnten, auch wenn dies nicht dargestellt ist. Die Transportbox 10 weist Seitenwände-Innenseiten mit ersten senkrechten Seitennuten 80, zweiten senkrechten Seitennuten 82, dritten senkrechten Seitennuten 84, vierten senkrechten Seitennuten 86 und fünften senkrechten Seitennuten 88 auf. Dabei legen die ersten Seitennuten 80 eine erste Position 60, die zweiten Seitennuten 82 eine zweite Position 62, die dritten Seitennuten 84 eine dritte Position 64, die vierten Seitennuten 86 eine vierte Position 66 und die fünften Seitennuten 88 eine fünfte Position 68 fest, die die Thermoisolierplatte 58 einnehmen kann. Die ersten Seitennuten 80 werden durch eine erste Bodennut 90 und eine erste Deckelnut 100 zu einer um 360° umlaufenden Nut vervollständigt. Die zweiten Seitennuten 82 werden durch eine zweite Bodennut 92 und eine zweite Deckelnut 102 zu einer um 360° umlaufenden Nut vervollständigt. Die dritten Seitennuten 84 werden durch eine dritte Bodennut 94 und eine dritte Deckelnut 104 zu einer um 360° umlaufenden Nut vervollständigt. Die vierten Seitennuten 86 werden durch eine vierte Bodennut 96 und eine vierte Deckelnut 106 zu einer um 360° umlaufenden Nut vervollständigt. Schließlich werden die fünften Seitennuten 88 werden durch eine fünfte Bodennut 98 und eine fünfte Deckelnut 108 zu einer um 360° umlaufenden Nut vervollständigt. Dabei ist der abgerundete Außenumfang der Thermoisolierplatte 58 so an die umlaufenden Nuten angepasst, dass sich ein Formschluss ergibt. Die Seitenwände-Innenseiten der Transportbox 10 weisen eine erste senkrechte Ausnehmung 110, eine zweite senkrechte Ausnehmung 112, eine dritte senkrechte Ausnehmung 114 und eine vierte senkrechte Ausnehmung 116 auf, die ein Hineinstellen und ein Herausnehmen von Gastro-Norm-Behältern erleichtern. In Figur 3 ist zu erkennen, dass die Transportbox 10 eine von außen erfassbare ID 118 in Form eines QR-Codes aufweist. Alternativ zur Anordnung des QR-Codes auf dem Deckel kann vorgesehen sein, den QR-Code an den Außenwänden der Transportbox 10 vorzusehen, insbesondere wenn der Deckel 56 vollständig von der Transportbox 10 abgenommen und somit theoretisch auf eine andere Transportbox aufgesetzt werden könnte. Die ID 118 in Form des QR-Codes dient insbesondere dazu, sowohl die Transportbox 10 als auch ihren Inhalt eindeutig identifizieren zu können. In diesem Zusammenhang kommen insbesondere alle HACCP-relevanten Daten oder sonstige für den jeweiligen Foodflow relevanten Daten in Betracht, wobei diesbezüglich auf die zugehörigen Ausführungen im allgemeinen Teil der Beschreibung verwiesen wird.

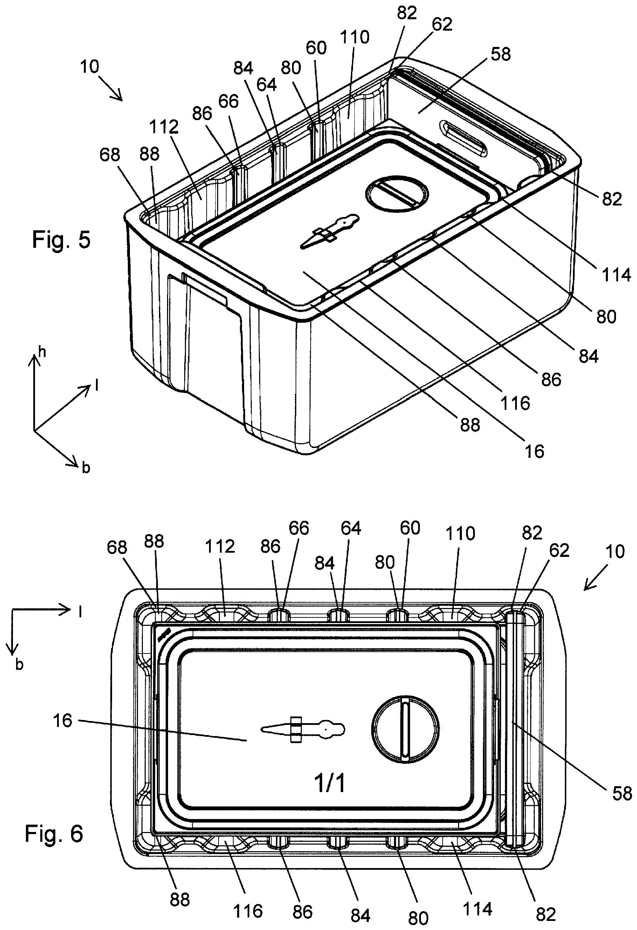

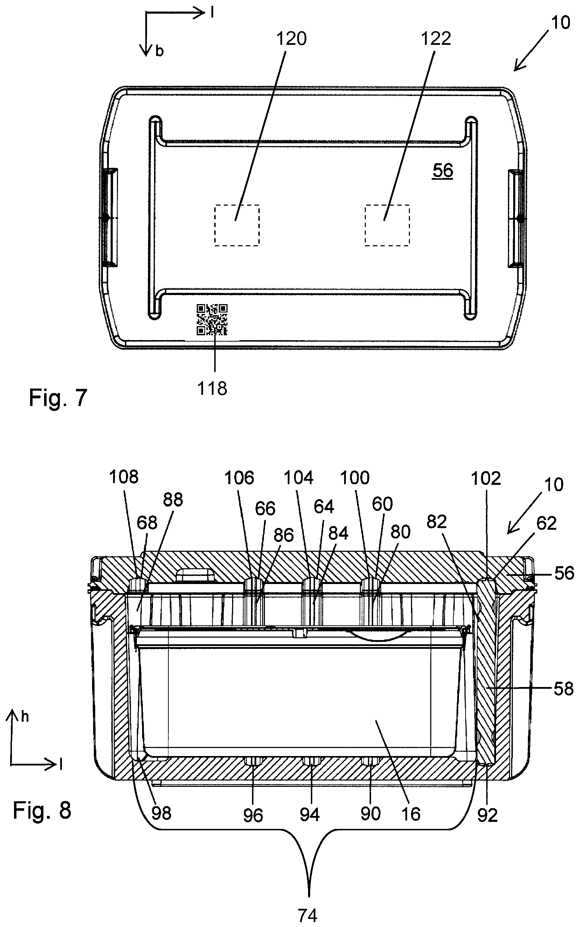

Die nachfolgend ebenfalls gemeinsam beschriebenen Figuren 5 bis 8 zeigen die Transportbox 10 aus den Figuren 1 bis 4 in einer zweiten Konfiguration. Bei dieser Konfiguration ist die Thermoisolierplatte 58 in diejenigen Nuten 82, 92, 102 eingesteckt, die die zweite Position 62 festlegen. Die zweite Position 62 dient dabei als Parkposition für die Thermoisolierplatte 58. Die Länge I und die Breite b der Transportbox 10 sind so auf die Stärke der Thermoisolierplatte 58 und die Lage der zweiten Position 62 abgestimmt, dass sich nur eine Stellfläche 74 ergibt (siehe Figur 8), die in diesem Fall an die Abmessungen eines 1/1-Gastro-Norm-Behälters angepasst ist. Im Übrigen wird auf die Beschreibung der Figuren 1 bis 4 verwiesen.

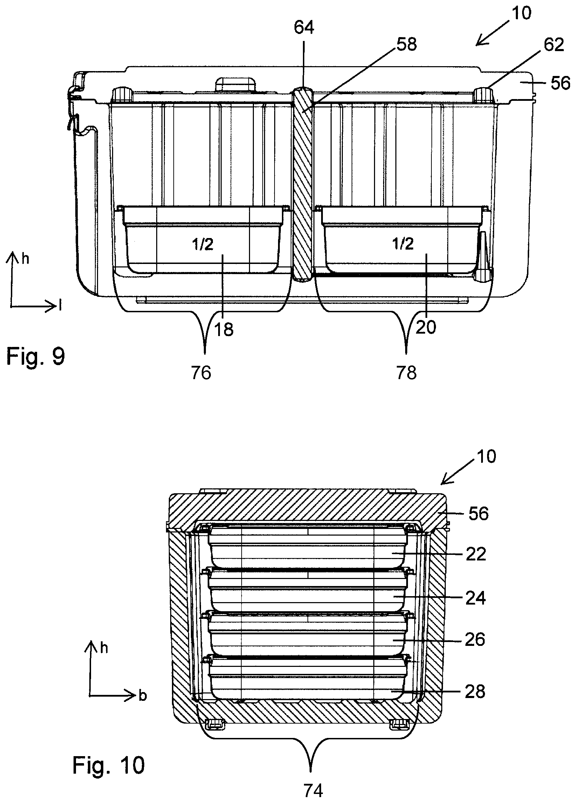

Figur 9 zeigt eine Längsschnittansicht der Transportbox 10 von Figur 1. Dabei befindet sich die Thermoisolierplatte 58 in der dritten Position 64, die durch die zugehörigen Nuten 84, 94, 104 so festgelegt ist, dass der Innenraum in zwei gleich große Teilinnenräume aufgeteilt wird. Dadurch ergibt sich eine vierte Stellfläche 76 und eine fünfte Stellfläche 78, wobei diese Stellflächen jeweils an die Abmessungen eines 1/2-Gastro-Norm-Behälters 18, 20 angepasst sind.

Figur 10 zeigt eine Querschnittansicht der Transportbox 10 von Figur 5, wobei in diesem Fall vier 1/1-Gastro-Norm-Behälter 22, 24, 26, 28 aufeinander gestapelt und auf einer dritten Stellfläche 74 abgestellt sind, die an die Abmessungen eines 1/1-Gastro-Norm-Behälters angepasst ist.

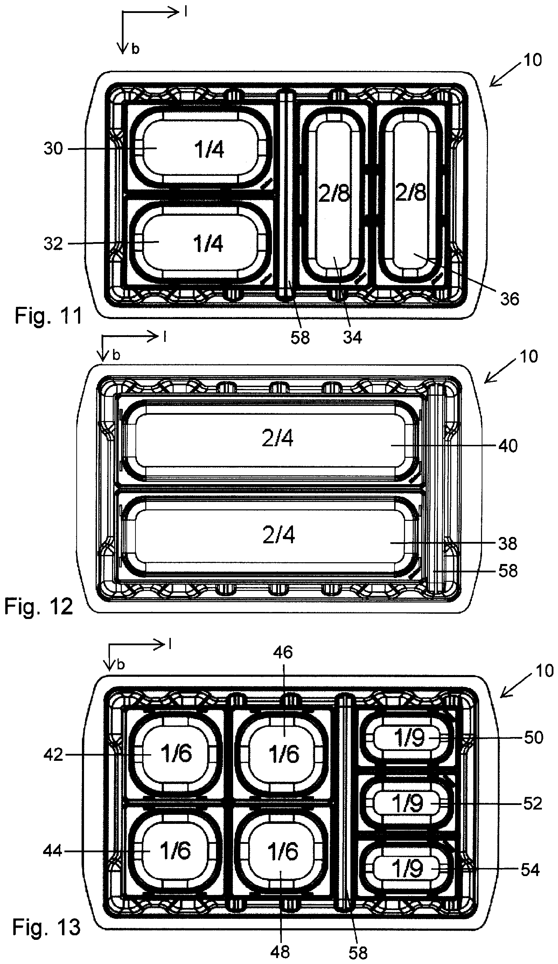

Figur 11 zeigt eine Draufsicht auf eine Transportbox 10 bei abgenommenem Deckel, wobei die Transportbox 10 durch die Thermoisolierplatte 58 wieder in zwei gleich große Teilinnenräume unterteilt ist. Dabei sind in dem bezogen auf die Darstellung linken Teilinnenraum zwei 1/4-Gastro-Norm-Behälter 30, 32 und in dem rechten Teilinnenraum zwei 2/8-Gastro-Norm-Behälter 34, 36 untergebracht.

Figur 12 zeigt ebenfalls eine Draufsicht auf eine Transportbox 10 bei abgenommenem Deckel, wobei sich die Thermoisolierplatte 58 in diesem Fall in der zweiten Position 62, also der Parkposition befindet. Somit entsprich der zur Verfügung stehende Innenraum dem Innenraum eines herkömmlichen an die Abmessungen eines 1/1-Gastro-Norm-Behälters angepassten Transportbox, so dass zwei 2/4-Gastro-Norm-Behälter 38, 40 in der Transportbox 10 nebeneinander Platz finden.

Auch Figur 13 zeigt eine Draufsicht auf eine Transportbox 10 bei abgenommenem Deckel. Dabei ist die Transportbox 10 durch die Thermoisolierplatte 58 wieder in zwei Teilinnenräume unterteilt, wobei der bezogen auf die Darstellung linke Teilinnenraum eine Größe von 2/3 des bei dieser Konfiguration zur Verfügung stehenden Gesamtinnenraums besitzt, während der rechte Teilinnenraum eine Größe von 1/3 des zur Verfügung stehenden Gesamtinnenraums aufweist. Im linken Teilinnenraum sind dabei vier 1/6-Gastro-Norm-Behälter 42, 44, 46, 48 nebeneinander untergebracht, was der Fläche entspricht, die ein einzelner 2/3-Gastro-Norm-Behälter erfordern würde. Im rechten Teilinnenraum befinden sich drei 1/9-Gastro-Norm-Behälter 50, 52, 54, die so nebeneinander angeordnet sind, dass die Fläche eines 1/3-Gastro-Norm-Behälters eingenommen wird.

Nachfolgend wird eine Ausführungsform des erfindungsgemäßen Verfahrens zum Beladen einer Transportbox für Gastro-Norm-Behälter erläutert. Ausgehend von Figur 7 sei zunächst angenommen, die Transportbox 10 käme von einem Einsatz beim Kunden zurück in eine Küche, und zwar an eine Be- und Entladestation für derartige Transportboxen. Dort wird die Transportbox 10, in Übereinstimmung mit dem Verfahrensschritt a), zunächst geöffnet, indem der Deckel 56 abgenommen wird. Dadurch ergibt sich das in Figur 5 dargestellte Bild, wobei angenommen sei, dass der 1/1-Gastro-Norm-Behälter 16 leer sei. Dieser leere 1/1-Gastro-Norm-Behälter 16 wird nun aus der Transportbox 10 entnommen, indem in die senkrechten Ausnehmungen 112, 114 gegriffen wird. Gegebenenfalls wird die Transportbox 10 nun einem Reinigungsvorgang unterzogen. Falls die Thermoisolierplatte 58 nicht schon für einen etwaigen Reinigungsvorgang senkrecht nach oben aus ihrer zweiten Position 62, die eine Parkposition darstellt, herausgezogen wurde, erfolgt dies nun. Anschließend wird die Thermoisolierplatte 58 von oben in die ersten Seitennuten 80 geschoben, die die erste Position festlegen. Dies entspricht der Anordnung der Thermoisolierplatte 58, wie sie in den Figuren 1, 2 und 4 zu erkennen ist. Die erste Position 60 ist dabei so gewählt, dass die Thermoisolierplatte 58 (bei aufgesetztem Deckel) zwei thermisch voneinander isolierte Teilinnenräume 6, 8 begrenzt, wie dies Figur 1 zu entnehmen ist. Die Stellflächen 70, 72 dieser Teilinnenräume 6, 8 sind dabei an die Abmessungen von Gastro-Norm-Behältern angepasst, und zwar derart, dass die Stellfläche 70 des Teilinnenraums 6 an die Abmessungen eines 2/3-Gastro-Norm-Behälters angepasst ist, während die Stellfläche 72 des Teilinnenraums 8 an die Abmessungen eines 1/3-Gastro-Norm-Behälters angepasst ist. Somit wurde der Verfahrensschritt b) durchgeführt. Anschließend wird in Übereinstimmung mit dem Verfahrensschritt c) der 2/3-Gastro-Norm-Behälter 12 und der 1/3-Gastro-Norm-Behälter 14 in die Transportbox 10 eingesetzt, so dass sich das in Figur 1 dargestellte Bild ergibt. Anschließend wird die Transportbox gemäß dem Verfahrensschritt d) durch das Aufsetzten des Deckels 56 wieder verschlossen.

Gemäß dem optionalen Verfahrensschritt e) wird nun mithilfe eines Smartphones die eindeutige ID der Transportbox 10 durch das Scannen des QR-Codes 118 erfasst. Auf dem Smartphone läuft eine Anwendung, die Zugriff auf eine zentrale Datenbank hat, die über einen Datensatz verfügt, der der über dem QR-Code 118 eindeutig identifizierten Transportbox 10 zugeordnet ist. Es werden nun geeignete Eingaben über das Smartphone vorgenommen, um den entsprechenden Datensatz der Datenbank dahingehend zu aktualisieren, dass er wiederspiegelt, dass die Transportbox 10 derzeit über zwei Teilinnenräume verfügt, wobei angenommen sei, dass der 2/3-Gastro-Norm-Behälter 12 warme Speisen enthält, während der 1/3-Gastro-Norm-Behälter 14 kalte Speisen enthält. Dementsprechend wird der Datensatz in der Datenbank so geändert, dass er wiederspiegelt, dass es sich bei dem Teilinnenraum 6 um einen Warmhalte-Teilinnenraum handelt, während es sich bei dem Teilinnenraum 8 um einen Kalthalte-Teilinnenraum handelt. Auf der Grundlage dieser Informationen kann beispielsweise auf die für die jeweiligen Teilinnenräume 6, 8 erforderlichen Solltemperaturen geschlossen werden, die ebenfalls in dem Datensatz hinterlegt werden können. Anschließend können gegebenenfalls noch weitere Informationen in dem Datensatz hinterlegt werden, beispielsweise die Art, die Menge, die Isttemperatur, die Herkunft oder das Ziel der in der Transportbox 10 beziehungsweise in den Gastro-Norm-Behältern 12, 14 enthaltenen Speisen. Gegebenenfalls kann dies auch durch Verweise auf andere Datenbanken oder Teildatenbanken erfolgen, beispielsweise in Fällen, in denen jeder Gastro-Norm-Behälter 12, 14 seinerseits über eine eindeutige ID verfügt, der ein eigener Datensatz zugeordnet ist. Generell kommen für den Datensatz, der sich insgesamt für die Transportbox 10 ergibt, alle HACCP-relevanten Daten oder sonstige für den Foodflow interessanten Daten in Betracht.

Für alle dargestellten Konfigurationen ist es, auch wenn dies nicht dargestellt ist, natürlich denkbar, dass mehrere Gastro-Norm-Behälter in beliebiger Größenkombination übereinander gestapelt werden können, solange durch die jeweiligen Kombinationen die zur Verfügung stehenden Stellflächen zumindest vorzugsweise ganz ausgenutzt werden. Voraussetzung hierfür ist natürlich eine entsprechende Höhe h der Transportbox 10.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 6: Erster Teilinnenraum
- 8: Zweiter Teilinnenraum
- 10: Transportbox
- 12: 2/3-Gastro-Norm-Behälter
- 14: 1/3-Gastro-Norm-Behälter
- 16: 1/1-Gastro-Norm-Behälter
- 18: 1/2-Gastro-Norm-Behälter
- 20: 1/2-Gastro-Norm-Behälter
- 22: 1/1-Gastro-Norm-Behälter
- 24: 1/1-Gastro-Norm-Behälter
- 26: 1/1-Gastro-Norm-Behälter
- 28: 1/1-Gastro-Norm-Behälter
- 30: 1/4-Gastro-Norm-Behälter
- 32: 1/4-Gastro-Norm-Behälter
- 34: 2/8-Gastro-Norm-Behälter
- 36: 2/8-Gastro-Norm-Behälter
- 38: 2/4-Gastro-Norm-Behälter
- 40: 2/4-Gastro-Norm-Behälter
- 42: 1/6-Gastro-Norm-Behälter
- 44: 1/6-Gastro-Norm-Behälter
- 46: 1/6-Gastro-Norm-Behälter
- 48: 1/6-Gastro-Norm-Behälter
- 50: 1/9-Gastro-Norm-Behälter
- 52: 1/9-Gastro-Norm-Behälter
- 54: 1/9-Gastro-Norm-Behälter
- 56: Deckel
- 58: Thermoisolierplatte
- 60: Erste Position
- 62: Zweite Position
- 64: Dritte Position
- 66: Vierte Position
- 68: Fünfte Position
- 70: Erste Stellfläche
- 72: Zweite Stellfläche
- 74: Dritte Stellfläche
- 76: Vierte Stellfläche
- 78: Fünfte Stellfläche
- 80: Erste Seitennuten
- 82: Zweite Seitennuten
- 84: Dritte Seitennuten
- 86: Vierte Seitennuten
- 88: Fünfte Seitennuten
- 90: Erste Bodennut
- 92: Zweite Bodennut
- 94: Dritte Bodennut
- 96: Vierte Bodennut
- 98: Fünfte Bodennut
- 100: Erste Deckelnut
- 102: Zweite Deckelnut
- 104: Dritte Deckelnut
- 106: Vierte Deckelnut
- 108: Fünfte Deckelnut
- 110: Erste senkrechte Ausnehmung
- 112: Zweite senkrechte Ausnehmung
- 114: Dritte senkrechte Ausnehmung
- 116: Vierte senkrechte Ausnehmung
- 118: ID / QR-Code
- 120: Temperatursensor
- 122: Temperatursensor

## Patentansprüche

1. Transportbox (10) für Gastro-Norm-Behälter (12, 14; 16; 18, 20; 22, 24, 26, 28; 30, 32, 34, 36; 38, 40; 42, 44, 46, 48, 50, 52, 54), wobei die Transportbox (10) eine thermische Isolierung ihres Innenraums gegenüber der Umgebung zur Verfügung stellt und einen Deckel (56) aufweist, mit dem sie geöffnet und geschlossen werden kann, und wobei die Transportbox (10) dazu vorgesehen ist, im geöffneten Zustand von oben mit Gastro-Norm-Behältern (12, 14; 16; 18, 20; 22, 24, 26, 28; 30, 32, 34, 36; 38, 40; 42, 44, 46, 48, 50, 52, 54) be- und entladen zu werden, **dadurch gekennzeichnet, dass** die Transportbox (10) einen Innenraum aufweist, der dazu ausgelegt ist, zumindest eine Thermoisolierplatte (58) wahlweise in zumindest einer ersten Positionen (60) oder einer zweiten Position (62) senkrecht aufzunehmen, dass von den Abmessungen des Innenraums Länge (I), Breite (b) und Höhe (h), die Länge (I) und die Breite (b) so gewählt sind, dass der Innenraum in zumindest zwei thermisch voneinander isolierte Teilinnenräume (6, 8) mit zwei an die Abmessungen von Gastro-Norm-Behältern (12, 14; 18, 20; 22, 24, 26, 28; 30, 32, 34, 36; 38, 40; 42, 44, 46, 48, 50, 52, 54) angepassten Stellflächen (70, 72) unterteilt ist, wenn sich die Thermoisolierplatte (58) in der ersten Position (60) befindet, und dass sich nur eine an die Abmessungen von Gastro-Norm-Behältern (16) angepasste Stellfläche (74) ergibt, wenn sich die Thermoisolierplatte (58) in der zweiten Position (62) befindet.

2. Transportbox (10) nach Anspruch 1, **dadurch gekennzeichnet, dass** die nur eine angepasste Stellfläche (74) an die Abmessungen eines 1/1-Gastro-Norm-Behälters (16) angepasst ist.

3. Transportbox (10) nach einem der vorhergehenden Ansprüche, **dadurch gekennzeichnet, dass** von den zwei angepassten Stellflächen (70, 72) eine an die Abmessungen eines 1/3-Gastro-Norm-Behälters (14) und eine an die Abmessungen eines 2/3-Gastro-Norm-Behälters (12) angepasst ist.

4. Transportbox (10) nach einem der vorhergehenden Ansprüche, **dadurch gekennzeichnet, dass** sie Seitenwände-Innenseiten mit ersten senkrechten Seitennuten (80) und mit zweiten senkrechten Seitennuten (82) aufweist, dass die ersten Seitennuten (80) die erste Position (60) und die zweiten Seitennuten (82) die zweite Position (62) festlegen, und dass die zumindest eine Thermoisolierplatte (58) wahlweise in die ersten Seitennuten (80) oder die zweiten Seitennuten (82) einsteckbar ist.

5. Transportbox (10) nach Anspruch 4, **dadurch gekennzeichnet, dass** sie eine Boden-Innenseite mit einer ersten Bodennut (90) und mit einer zweiten Bodennut (92) aufweist, dass die erste Bodennut (90) in einer Ebene mit den ersten Seitennuten (80) liegt, und dass die zweite Bodennut (92) in einer Ebene mit den zweiten Seitennuten (82) liegt.

6. Transportbox (10) nach Anspruch 4 oder 5, **dadurch gekennzeichnet, dass** sie eine Deckel-Innenseite mit einer ersten Deckelnut (100) und mit einer zweiten Deckelnut (102) aufweist, dass die erste Deckelnut (100) in einer Ebene mit den ersten Seitennuten (80) liegt, und dass die zweite Deckelnut (102) in einer Ebene mit den zweiten Seitennuten (82) liegt.

7. Transportbox (10) nach einem der vorhergehenden Ansprüche, **dadurch gekennzeichnet, dass** sie Seitenwände-Innenseiten mit mehreren senkrechten Ausnehmungen (110, 112, 114, 116) aufweist, die ein Hineinstellen und ein Herausnehmen von Gastro-Norm-Behältern (12, 14; 16; 18, 20; 22, 24, 26, 28; 30, 32, 34, 36; 38, 40; 42, 44, 46, 48, 50, 52, 54) erleichtern.

8. Transportbox (10) nach einem der vorhergehenden Ansprüche, **dadurch gekennzeichnet, dass** die Transportbox (10) mit einer von außen erfassbaren ID (118) versehen ist, die mit der aktuellen Anzahl der Teilinnenräume mit an die Abmessungen von Gastro-Norm-Behältern (12, 14; 16; 18, 20; 22, 24, 26, 28; 30, 32, 34, 36; 38, 40; 42, 44, 46, 48, 50, 52, 54) angepassten Stellflächen (70, 72, 74, 76, 78) verknüpfbar oder verknüpft ist

9. Transportbox (10) nach Anspruch 8, **dadurch gekennzeichnet, dass** sie mit wenigstens zwei Temperatursensoren (120, 122) ausgestattet ist, die so angeordnet sind, dass jeder von ihnen die Temperatur in einem der Teilinnenräume (6, 8) erfassen kann.

10. Transportbox (10) nach Anspruch 8 oder 9, **dadurch gekennzeichnet, dass** die von außen erfassbare ID (118) dazu dient, direkt oder indirekt mittels einer Datenbank eine oder mehrere der folgenden Informationen bezogen auf den jeweiligen Teilinnenraum (6, 8) der Transportbox (10) bereitzustellen oder zuzuordnen:
- In der Transportbox (10) enthaltene mittels eigener ID (118, 120) eindeutig identifizierbare Gastro-Norm-Behälter (12, 14; 16; 18, 20; 22, 24, 26, 28; 30, 32, 34, 36; 38, 40; 42, 44, 46, 48, 50, 52, 54);
- Art der in der Transportbox (10) enthaltenen Speisen;
- Menge der in der Transportbox (10) enthaltenen Speisen;
- Solltemperatur der in der Transportbox (10) enthaltenen Speisen;
- Isttemperatur der in der Transportbox (10) enthaltenen Speisen;
- Herkunft der in der Transportbox (10) enthaltenen Speisen;
- Ziel der in der Transportbox (10) enthaltenen Speisen;
- Verweis auf einen Datensatz einer Datenbank;
- HACCP-relevante Daten, oder Verweis auf einen Datensatz einer HACCP-relevante Daten aufnehmenden und/oder bereitstellenden Datenbank.

11. Verwendung einer Thermoisolierplatte (58) in einer Transportbox (10) nach einem der vorhergehenden Ansprüche.

12. Verwendung nach Anspruch 11, **dadurch gekennzeichnet, dass** die Thermoisolierplatte (58) zumindest teilweise aus Polypropylen besteht.

13. Verfahren zum Beladen einer von oben be- und entladbaren Transportbox (10) für Gastro-Norm-Behälter (12, 14; 16; 18, 20; 22, 24, 26, 28; 30, 32, 34, 36; 38, 40; 42, 44, 46, 48, 50, 52, 54), insbesondere einer Transportbox nach einem der Ansprüche 1 bis 11, wobei die geschlossene Transportbox (10) eine thermische Isolierung ihres Innenraums gegenüber der Umgebung zur Verfügung stellt, **gekennzeichnet durch** die folgenden Schritte:
a) Öffnen der Transportbox (10), falls diese nicht bereits geöffnet ist;
b) Bewegen einer in der Transportbox (10) enthaltenen Thermoisolierplatte (58) von einer zweiten Position (62), in der sich nur eine an die Abmessungen von Gastro-Norm-Behältern (16) angepasste Stellfläche (74) ergibt, in eine erste Position (60), wobei die Thermoisolierplatte (58) sowohl in der ersten Position (60) als auch in der zweiten Position (62) senkrecht in dem Innenraum der Transportbox (10) angeordnet ist, und wobei die erste Position (60) so gewählt wird, dass die Thermoisolierplatte (58) zwei thermisch voneinander isolierte Teilinnenräume (6, 8) begrenzt, deren Stellflächen (70, 72) an die Abmessungen von Gastro-Norm-Behältern (12, 14; 16; 18, 20; 22, 24, 26, 28; 30, 32, 34, 36; 38, 40; 42, 44, 46, 48, 50, 52, 54) angepasst sind;
c) Beladen von wenigstens einem Teilinnenraum (6, 8) mit einem oder mehreren Gastro-Norm-Behältern (12, 14; 16; 18, 20; 22, 24, 26, 28; 30, 32, 34, 36; 38, 40; 42, 44, 46, 48, 50, 52, 54); und
d) Verschließen der Transportbox (10).

14. Verfahren nach Anspruch 13, **dadurch gekennzeichnet, dass** es den folgenden weiteren, bezogen auf die Schritte a) bis d) an beliebiger Stelle ausführbaren Schritt umfasst:
e) Verknüpfen der aktuell vorgesehenen Anzahl von Teilinnenräumen (6, 8) mit einer von außen erfassbaren ID der Transportbox (10).

15. Verfahren nach Anspruch 14, **dadurch gekennzeichnet, dass** der Schritt e) weiterhin umfasst, dass die von außen erfassbare ID mit Informationen darüber verknüpft wird, ob es sich bei einem jeweiligen Teilinnenraum um einen Warmhalte-Teilinnenraum oder einen Kalthalte-Teilinnenraum handelt.

16. Verfahren nach Anspruch 14 oder 15, **dadurch gekennzeichnet, dass** der
Schritt e)
weiterhin umfasst, dass eine oder mehrere der folgenden Informationen mit der von außen erfassbaren ID der Transportbox (10) bezogen auf den jeweiligen Teilinnenraum (6, 8) der Transportbox (10) verknüpft wird:
- In der Transportbox (10) enthaltene oder einzubringende mittels eigener ID (118, 120) eindeutig identifizierbare Gastro-Norm-Behälter (12, 14; 16; 18, 20; 22, 24, 26, 28; 30, 32, 34, 36; 38, 40; 42, 44, 46, 48, 50, 52, 54);
- Art der in der Transportbox (10) enthaltenen Speisen;
- Menge der in der Transportbox (10) enthaltenen Speisen;
- Solltemperatur der in der Transportbox (10) enthaltenen Speisen;
- Isttemperatur der in der Transportbox (10) enthaltenen Speisen;
- Herkunft der in der Transportbox (10) enthaltenen Speisen;
- Ziel der in der Transportbox (10) enthaltenen Speisen;
- Verweis auf einen Datensatz einer Datenbank;
- HACCP-relevante Daten, oder Verweis auf einen Datensatz einer HACCP-relevante Daten aufnehmenden und/oder bereitstellenden Datenbank.

## Claims

1. A transport box (10) for Gastronorm-Containers (12, 14; 16; 18, 20; 22, 24, 26, 28; 30, 32, 34, 36; 38, 40; 42, 44, 46, 48, 50, 52, 54), the transport box (10) providing for thermal insulation of its interior space with respect to the environment and comprising a lid (56) by means of which it can be opened and closed, and the transport box (10) being provided to be loaded and unloaded with Gastronorm-Containers (12, 14; 16; 18, 20; 22, 24, 26, 28; 30, 32, 34, 36; 38, 40; 42, 44, 46, 48, 50, 52, 54) from above in the opened state, **characterised in that** the transport box (10) has an interior space designed to, optionally, vertically accommodate at least one thermal insulation plate (58) in at least a first position (60) or a second position (62), that, among the dimensions of the interior space, the length (I), the width (b) and the height (h), the length (I) and the width (b) are selected so that the interior space is subdivided into at least two partial interior spaces (6, 8) thermally insulated with respect to each other and including two storage spaces (70, 72) adapted to the dimensions of Gastronorm-Containers (12, 14; 18, 20; 22, 24, 26, 28; 30, 32, 34, 36; 38, 40; 42, 44, 46, 48, 50, 52, 54) when the thermal insulation plate (58) is arranged in the first position (60), and that only one storage space (74) adapted to the dimensions of Gastronorm-Containers (16) is obtained when the thermal insulation plate (58) is arranged in the second position (62).

2. The transport box (10) according to claim 1, **characterised in that** the only one adapted storage space (74) is adapted to the dimensions of a 1/1 Gastronorm-Container (16).

3. The transport box (10) according to one of the preceding claims, **characterised in that,** among the two adapted storage spaces (70, 72), one is adapted to the dimensions of a 1/3 Gastronorm-Container (14), and one to the dimensions of a 2/3 Gastronorm-Container (12).

4. The transport box (10) according to one of the preceding claims, **characterised in that** it comprises inner side wall surfaces having first vertical side grooves (80) and second vertical side grooves (82), that the first side grooves (80) define the first position (60) and that the second side grooves (82) define the second position (62), and that the at least one thermal insulation plate (58) is optionally insertable into the first side grooves (80) or the second side grooves (82).

5. The transport box (10) according to claim 4, **characterised in that** it comprises an inner bottom surface having a first bottom groove (90) and a second bottom groove (92), that the first bottom groove (90) is located in one plane with the first side grooves (80), and that the second bottom groove (92) is located in one plane with the second side grooves (82).

6. The transport box (10) according to claim 4 or 5, **characterised in that** it comprises an inner side of the lid having a first lid groove (100) and a second lid groove (102), that the first lid groove (100) is located in one plane with the first side grooves (80), and that the second lid groove (102) is located in one plane with the second side grooves (82).

7. The transport box (10) according to one of the preceding claims, **characterised in that** it comprises inner side wall surfaces having a plurality of vertical recesses (110, 112, 114, 116) facilitating an insertion and detachment of Gastronorm-Containers (12, 14; 16; 18, 20; 22, 24, 26, 28; 30, 32, 34, 36; 38, 40; 42, 44, 46, 48, 50, 52, 54).

8. The transport box (10) according to one of the preceding claims, **characterised in that** the transport box (10) is provided with an ID (118) identifiable from the outside linkable or linked to the current number of partial interior spaces comprising storage spaces (70, 72, 74, 76, 78) adapted to the dimensions of Gastronorm-Containers (12, 14; 16; 18, 20; 22, 24, 26, 28; 30, 32, 34, 36; 38, 40; 42, 44, 46, 48, 50, 52, 54).

9. The transport box (10) according to claim 8, **characterised in that** it is equipped with at least two temperature sensors (120, 122) which are arranged so that each of them can detect the temperature in one of the partial interior spaces (6, 8).

10. The transport box (10) according to claim 8 or 9, **characterised in that** the ID (118) identifiable from the outside serves to directly or indirectly provide or allocate one or a plurality of the following data relating to the respective partial interior space (6, 8) of the transport box (10) by means of a database:
- Gastronorm-Containers (12, 14; 16; 18, 20; 22, 24, 26, 28; 30, 32, 34, 36; 38, 40; 42, 44, 46, 48, 50, 52, 54) contained in the transport box (10) and precisely identifiable by means of their own ID (118, 120);
- type of food contained in the transport box (10);
- amount of food contained in the transport box (10);
- target temperature of the food contained in the transport box (10);
- actual temperature of the food contained in the transport box (10);
- origin of the food contained in the transport box (10);
- destination of the food contained in the transport box (10);
- reference to a dataset in a database;
- HACCP-relevant data, or reference to a dataset in a database recording and/or providing HACCP-relevant data.

11. A utilisation of a thermal insulation plate (58) in a transport box (10) according to one of the preceding claims.

12. The utilisation according to claim 11, **characterised in that** the thermal insulation plate (58) is, at least partly, made of polypropylene.

13. A method for loading a transport box (10) for Gastronorm-Containers (12, 14; 16; 18, 20; 22, 24, 26, 28; 30, 32, 34, 36; 38, 40; 42, 44, 46, 48, 50, 52, 54) loadable and unloadable from above, particularly of a transport box according to one of claims 1 to 11, the closed transport box (10) providing for thermal insulation of its interior space with respect to the environment, **characterised by** the following steps:
a) opening the transport box (10) unless it is already opened;
b) moving a thermal insulation plate (58) contained in the transport box (10) from a second position (62) in which only one storage space (74) adapted to the dimensions of a gastro standard container (16) is obtained to a first position (60), the thermal insulation plate (58) being disposed vertically in the interior space of the transport box (10) both in the first position (60) and in the second position (62), and the first position (60) being selected so that the thermal insulation plate (58) defines two partial interior spaces (6, 8) thermally insulated with respect to each other, the storage spaces of which (70, 72) are adapted to the dimensions of Gastronorm-Containers (12, 14; 16; 18, 20; 22, 24, 26, 28; 30, 32,34,36;38,40;42,44,46,48,50,52,54);
c) loading at least one partial interior space (6, 8) with one or more Gastronorm-Containers (12, 14; 16; 18, 20; 22, 24, 26, 28; 30, 32, 34, 36; 38, 40; 42, 44, 46, 48, 50, 52, 54); and
d) closing the transport box (10).

14. The method according to claim 13, **characterised in that** it comprises the following further step performable in an arbitrary place with respect to steps a) to d):
e) linking the currently provided number von partial interior spaces (6, 8) with an ID identifiable from the outside of the transport box (10).

15. The method according to claim 14, **characterised in that** step e) further includes that the ID identifiable from the outside is linked to data indicating whether a respective partial interior space is a partial interior space for keeping its content warm or a partial interior space for keeping its content cold.

16. The method according to claim 14 or 15, **characterised in that** step e)
further includes that one or a plurality of the following data are linked to the ID of the transport box (10) identifiable from the outside with respect to the respective partial interior space (6, 8) of the transport box (10):
- Gastronorm-Containers (12, 14; 16; 18, 20; 22, 24, 26, 28; 30, 32, 34, 36; 38, 40; 42, 44, 46, 48, 50, 52, 54) contained in or to be inserted into the transport box (10) and precisely identifiable by means of their own ID (118, 120);
- type of food contained in the transport box (10);
- amount of food contained in the transport box (10);
- target temperature of the food contained in the transport box (10);
- actual temperature of the food contained in the transport box (10);
- origin of the food contained in the transport box (10);
- destination of the food contained in the transport box (10);
- reference to a dataset in a database;
- HACCP-relevant data, or reference to a dataset in a database recording and/or providing HACCP-relevant data.

## Revendications

1. Caisse de transport (10) pour récipients Gastro Norm (12, 14 ; 16 ; 18, 20 ; 22, 24, 26, 28 ; 30, 32, 34, 36 ; 38, 40 ; 42, 44, 46, 48, 50, 52, 54) ; selon laquelle la caisse de transport (10) met à disposition une isolation thermique de son compartiment intérieur vis-à-vis de l'environnement et présente un couvercle (56), au moyen duquel elle peut être ouverte et fermée ; et selon laquelle la caisse de transport (10) est prévue pour être chargée et déchargée par le haut, à l'état ouvert, avec des récipients Gastro Norm (12, 14 ; 16 ; 18, 20 ; 22, 24, 26, 28 ; 30, 32, 34, 36 ; 38, 40 ; 42, 44, 46, 48, 50, 52, 54), **caractérisée en ce que** la caisse de transport (10) présente un compartiment intérieur, lequel est conçu en vue de recevoir, à la verticale, au moins une plaque d'isolation thermique (58), de manière sélective dans au moins une première position (60) ou une deuxième position (62) ; **caractérisée en ce que**, parmi les dimensions du compartiment intérieur que sont la longueur (I), la largeur (b) et la hauteur (h), la longueur (I) et la largeur (b) sont sélectionnées de telle sorte que le compartiment intérieur est divisé en au moins deux compartiments intérieurs partiels (6, 8), lesquels sont isolés thermiquement l'un de l'autre, avec deux surfaces de stockage (70, 72) adaptées aux dimensions des récipients Gastro Norm (12, 14 ; 18, 20 ; 22, 24, 26, 28 ; 30, 32, 34, 36 ; 38, 40 ; 42, 44, 46, 48, 50, 52, 54), quand la plaque d'isolation thermique (58) se trouve dans la première position (60) ; et **caractérisée en ce qu'**il n'y a qu'une seule surface de stockage (74) adaptée aux dimensions des récipients Gastro Norm (16), quand la plaque d'isolation thermique (58) se trouve dans la deuxième position (62).

2. Caisse de transport (10) selon la revendication 1, **caractérisée en ce que** la seule surface de stockage (74) adaptée est adaptée aux dimensions d'un récipient Gastro Norm de type 1/1 (16).

3. Caisse de transport (10) selon l'une des revendications précédentes, **caractérisée en ce que** parmi les deux surfaces de stockage (70, 72) adaptées, l'une est adaptée aux dimensions d'un récipient Gastro Norm de type 1/3 (14) et l'autre est adaptée aux dimensions d'un récipient Gastro Norm de type 2/3 (12).

4. Caisse de transport (10) selon l'une des revendications précédentes, **caractérisée en ce qu'**elle présente des faces intérieures de parois intérieures avec des premières rainures latérales (80) perpendiculaires et avec des deuxièmes rainures latérales (82) perpendiculaires ; **caractérisée en ce que** les premières rainures latérales (80) déterminent la première position (60) et les deuxièmes rainures latérales (82) déterminent la deuxième position (62) ; et **caractérisée en ce que** l'au moins une plaque d'isolation thermique (58) peut être emboîtée de manière sélective soit dans les premières rainures latérales (80), soit dans les deuxièmes rainures latérales (82).

5. Caisse de transport (10) selon la revendication 4, **caractérisée en ce qu'**elle présente une face intérieure du fond avec une première rainure dans le fond (90) et avec une deuxième rainure dans le fond (92) ; **caractérisée en ce que** la première rainure dans le fond (90) se situe dans un plan avec les premières rainures latérales (80) ; et **caractérisée en ce que** la deuxième rainure dans le fond (92) se situe dans un plan avec les deuxièmes rainures latérales (82).

6. Caisse de transport (10) selon la revendication 4 ou 5, **caractérisée en ce qu'**elle présente une face intérieure du couvercle avec une première rainure dans le couvercle (100) et avec une deuxième rainure dans le couvercle (102) ; **caractérisée en ce que** la première rainure dans le couvercle (100) se situe dans un plan avec les premières rainures latérales (80) ; et **caractérisée en ce que** la deuxième rainure dans le couvercle (102) se situe dans un plan avec les deuxièmes rainures latérales (82).

7. Caisse de transport (10) selon l'une des revendications précédentes, **caractérisée en ce qu'**elle présente des faces intérieures de parois intérieures avec plusieurs gorges (110, 112, 114, 116) verticales, lesquelles facilitent une insertion et une extraction des récipients Gastro Norm (12, 14 ; 16 ; 18, 20 ; 22, 24, 26, 28 ; 30, 32, 34, 36 ; 38, 40 ; 42, 44, 46, 48, 50, 52, 54).

8. Caisse de transport (10) selon l'une des revendications précédentes, **caractérisée en ce que** ladite caisse de transport (10) est pourvue d'un numéro d'identification (118), lequel peut être reconnu de l'extérieur et lequel peut être rattaché ou est rattaché au nombre effectif de compartiments intérieurs partiels ayant des surfaces de stockage (70, 72, 74, 76, 78) adaptées aux dimensions des récipients Gastro Norm (12, 14 ; 16 ; 18, 20 ; 22, 24, 26, 28 ; 30, 32, 34, 36 ; 38, 40 ; 42, 44, 46, 48, 50, 52, 54).

9. Caisse de transport (10) selon la revendication 8, **caractérisée en ce qu'**elle est équipée d'au moins deux sondes de température (120, 122), lesquelles sont disposées de telle sorte que chacune d'elles puisse déterminer la température dans l'un des compartiments intérieurs partiels (6, 8).

10. Caisse de transport (10) selon la revendication 8 ou 9, **caractérisée en ce que** le numéro d'identification (118) pouvant être reconnu de l'extérieur sert à mettre à disposition ou à associer, directement ou indirectement au moyen d'une banque de données, l'une ou plusieurs des informations suivantes, relatives au compartiment intérieur partiel (6, 8) respectif de la caisse de transport (10) :
- les récipients Gastro Norm (12, 14 ; 16 ; 18, 20 ; 22, 24, 26, 28 ; 30, 32, 34, 36 ; 38, 40 ; 42, 44, 46, 48, 50, 52, 54) qui se trouvent dans la caisse de transport (10) et qui peuvent être clairement identifiés au moyen d'un propre numéro d'identification (118, 120) ;
- la nature des plats qui se trouvent dans la caisse de transport (10) ;
- la quantité des plats qui se trouvent dans la caisse de transport (10) ;
- la température nominale des plats qui se trouvent dans la caisse de transport (10) ;
- la température réelle des plats qui se trouvent dans la caisse de transport (10) ;
- l'origine des plats qui se trouvent dans la caisse de transport (10) ;
- la destination des plats qui se trouvent dans la caisse de transport (10) ;
- la référence à un jeu de données d'une banque de données ;
- les données relatives au système d'analyse des dangers - points critiques (HACCP) ou la référence à un jeu de données d'une banque de données qui reçoit et/ou qui met à disposition des données relatives au système d'analyse des dangers - points critiques (HACCP).

11. Utilisation d'une plaque d'isolation thermique (58) dans une caisse de transport (10) selon l'une des revendications précédentes.

12. Utilisation selon la revendication 11, **caractérisée en ce que** la plaque d'isolation thermique (58) est constituée, au moins en partie, de polypropylène.

13. Procédé destiné au chargement d'une caisse de transport (10) pour des récipients Gastro Norm (12, 14 ; 16 ; 18, 20 ; 22, 24, 26, 28 ; 30, 32, 34, 36 ; 38, 40 ; 42, 44, 46, 48, 50, 52, 54), laquelle caisse de transport peut être chargée et déchargée par le haut, en particulier d'une caisse de transport selon l'une des revendications 1 à 11 ; selon lequel la caisse de transport (10) fermée met à disposition une isolation thermique de son compartiment intérieur vis-à-vis de l'environnement, et **caractérisé par** les phases suivantes :
a) l'ouverture de la caisse de transport (10), si cette dernière n'est pas déjà ouverte ;
b) le déplacement d'une plaque d'isolation thermique (58) qui se trouve dans la caisse de transport (10) depuis une deuxième position (62), dans laquelle il n'y a qu'une seule surface de stockage (74) adaptée aux dimensions des récipients Gastro Norm (16), vers une première position (60) ; selon lequel la plaque d'isolation thermique (58), aussi bien dans la première position (60) que dans la deuxième position (62), est disposée à la verticale dans le compartiment intérieur de la caisse de transport (10) ; et selon lequel la première position (60) est sélectionnée de telle sorte que la plaque d'isolation thermique (58) délimite deux compartiments intérieurs partiels (6, 8), lesquels sont isolés thermiquement l'un de l'autre et dont les surfaces de stockage (70, 72) sont adaptées aux dimensions des récipients Gastro Norm (12, 14 ; 16 ; 18, 20 ; 22, 24, 26, 28 ; 30, 32, 34, 36 ; 38, 40 ; 42, 44, 46, 48, 50, 52, 54) ;
c) le chargement d'au moins un compartiment intérieur partiel (6, 8) d'un ou de plusieurs récipients Gastro Norm (12, 14 ; 16 ; 18, 20 ; 22, 24, 26, 28 ; 30, 32, 34, 36 ; 38, 40 ; 42, 44, 46, 48, 50, 52, 54) ; et
d) le verrouillage de la caisse de transport (10).

14. Procédé selon la revendication 13, **caractérisé en ce que** ledit procédé comprend en outre la phase suivante, laquelle peut être réalisée à n'importe quel point au regard des phases a) à d) :
e) le rattachement du nombre de compartiments intérieurs partiels (6, 8) effectivement prévus à un numéro d'identification de la caisse de transport (10) qui peut être reconnu de l'extérieur.

15. Procédé selon la revendication 14, **caractérisé en ce que** la phase e) comprend en outre le fait que le numéro d'identification qui peut être reconnu de l'extérieur peut être rattaché à des informations, lesquelles permettent de savoir si un compartiment intérieur partiel respectif est un compartiment intérieur partiel qui permet de maintenir au chaud ou un compartiment intérieur partiel qui permet de maintenir au froid.

16. Procédé selon la revendication 14 ou 15, **caractérisée en ce que** la phase e) comprend en outre le fait que l'une ou plusieurs des informations suivantes est ou sont rattachées au numéro d'identification de la caisse de transport (10) qui peut être reconnu de l'extérieur, en fonction du compartiment intérieur (6, 8) respectif de la caisse de transport (10) :
- les récipients Gastro Norm (12, 14 ; 16 ; 18, 20 ; 22, 24, 26, 28 ; 30, 32, 34, 36 ; 38, 40 ; 42, 44, 46, 48, 50, 52, 54) qui se trouvent dans la caisse de transport (10) ou qui doivent être insérés dans la caisse de transport et qui peuvent être clairement identifiés au moyen du numéro d'identification (118, 120) proprement dit ;
- la nature des plats qui se trouvent dans la caisse de transport (10) ;
- la quantité des plats qui se trouvent dans la caisse de transport (10) ;
- la température nominale des plats qui se trouvent dans la caisse de transport (10) ;
- la température réelle des plats qui se trouvent dans la caisse de transport (10) ;
- l'origine des plats qui se trouvent dans la caisse de transport (10) ;
- la destination des plats qui se trouvent dans la caisse de transport (10) ;
- la référence à un jeu de données d'une banque de données ;
- les données relatives au système d'analyse des dangers - points critiques (HACCP) ou la référence à un jeu de données d'une banque de données qui reçoit et/ou qui met à disposition des données relatives au système d'analyse des dangers - points critiques (HACCP).
